# EUROPEAN PATENT SPECIFICATION

(11) **EP 2 889 608 B1**
(45) Date of publication and mention of the grant of the patent: **28.04.2021**
(21) Application number: 14199253.7
(22) Date of filing: 19.12.2014
(51) Int. Cl.: G01N 21/65, G01N 21/3577, G01G 17/04

(54) **Inspection methods and apparatuses for inspection of liquids**
Inspektionsverfahren und -vorrichtungen für Flüssigkeiten
Procédés et appareils d'inspection pour liquides

(30) Priority: 27.12.2013 CN 201310741358
(43) Date of publication of application: 01.07.2015
(73) Proprietor: Nuctech Company Limited, TongFang Building, Shuangqinglu, Haidian District Beijing 100084 (CN)
(72) Inventor: Wang, Hongqiu, 100084 Beijing (CN); Yi, Yumin, 100084 Beijing (CN); Feng, Huacheng, 100084 Beijing (CN); Fan, Rui, 100084 Beijing (CN)
(74) Representative: Gunzelmann, Rainer

(56) References cited:
- EP-A1- 2 348 303
- WO-A1-2008/062185
- WO-A1-2008/075511
- JP-A- 2007 248 222
- JP-A- 2009 251 828
- MICHAEL L. RAMIREZ ET AL: "Detection of hazardous liquids concealed in glass, plastic, and aluminum containers", PROCEEDINGS OF SPIE, vol. 6538, 9 April 2007 (2007-04-09), pages 653827-653827-9, XP055197616, ISSN: 0277-786X, DOI: 10.1117/12.720570
- LOEFFEN PAUL W ET AL: "Spatially offset Raman spectroscopy (SORS) for liquid screening", OPTICS AND PHOTONICS FOR COUNTERTERRORISM AND CRIME FIGHTING VII; OPTICAL MATERIALS IN DEFENCE SYSTEMS TECHNOLOGY VIII; AND QUANTUM-PHYSICS-BASED INFORMATION SECURITY, SPIE, 1000 20TH ST. BELLINGHAM WA 98225-6705 USA, vol. 8189, no. 1, 6 October 2011 (2011-10-06), pages 1-10, XP060010230, DOI: 10.1117/12.898109 [retrieved on 1901-01-01]
- LEWIS I R ET AL: "Raman spectroscopic studies of explosive materials: towards a fieldable explosives detector", SPECTROCHIMICA ACTA. PART A: MOLECULAR SPECTROSCOPY, PERGAMON PRESS, OXFORD, GB, vol. 51A, no. 12, 16 November 1995 (1995-11-16), pages 1985-2000, XP002469739, ISSN: 0584-8539

## Description

### TECHNICAL FIELD

Embodiments of the present disclosure relate to safety inspection technology, and more particularly, to methods and apparatuses for rapid safety inspection of liquids.

### BACKGROUND

In recent years, terrorists have carried out violent terrorism activities in public places in various manners. A variety of dangerous liquids, such as dangerous chemicals, have been used in these terrorism activities. Safety inspection of liquids carried by people is specifically required in addition to general inspection of luggage or packages. The flow of people in public places is in huge quantity at high speed, and thus it requires a rapid and efficient method and apparatus for safety inspection.

There are currently four types of methods for safety inspection of liquids, including chemical method, electromagnetic method, neutron method and X-ray method as described below.
1) The chemical methods include methods like scent identification, ion scanning detection, and material analysis. The scent identification method is often ineffective in practical application because the liquid is sealed in package. The ion scanning detection method is characterized in high sensitivity, but has shortcomings of high false alarm rate and susceptibility to influence from background environment. The material analysis method has high precision and accuracy, but takes an amount of time for analyzing sample. Further, the method may cause chemical contamination. Therefore, the method cannot meet the requirement of rapid inspection in site.
2) The electromagnetic method uses active measurement, and distinguishes among different liquids based on permittivity of the liquids with respect to electromagnetic wave. The method is susceptible to adverse influence from, for example, metallic package, thick package material, and irregularly-shaped bottle. Thus, use of the method is limited in case of complicated package material.
3) Utilization of the neutron method will cause a phenomenon called "neutron activation," that is, there will be radiation residua in the liquid after inspection by the method. Meanwhile, neutron has strong penetrating power, and thus it requires complication radiation shield measurement. The device has a large footprint, and is not portable, and thus not suitable for use in most public places.
4) The X-ray method can be divided into 2-Dimensional (2D) X-ray scanning technology and CT technology. The general 2D scanning technology is mainly used for inspection of luggage, and unable to determine whether a liquid is dangerous. The CT technology has an advantage of not being affected by package material. Although it can perform liquid inspection, it requires shielding from rays. The imaging system including X-ray sources and detectors is large in volume and weight, not portable, expensive, and relatively slow in examination speed. It is difficult to be widely utilized.

The above four methods each have disadvantages in view of rapid safety inspection of liquids. A technique is needed for rapid inspection of liquids.

Document "Detection of Hazardous Liquids Concealed in Glass, Plastic and Aluminum Containers", Michael L. Ramirez et.al., Proceedings of SPIE Vol. 6538, discloses technique for detecting hazardous liquids such as explosive mixtures, flammables or even chemical warfare agents (CWA) that can be concealed in common containers and pass security checks undetected. The document presents three non-invasive, non-destructive detection approaches that can be used to characterize the content of common liquid containers and detect if the liquid is the intended or a concealed hazardous liquid. Fiber optic coupled Raman spectroscopy and stand-off Raman spectroscopy were used to inspect the content of glass and plastic bottles and thermal conductivity was used to assess the liquid inside aluminum cans. Raman spectroscopy experiments were performed at 532 nm, 488 nm and 785 nm excitation wavelengths. The hazardous liquids under consideration included CWA simulant DMMP, hydrogen peroxide, acetone, cyclohexane, ethanol and nitric acid. The techniques have potential use as a detector for hazardous liquids at a check point or to inspect suspicious bottles from a distance.

Document JP 2009-251 828 A discloses a security system including a container information output device installed in a store with a mass measurement part for measuring the mass of a fluid container in which fluid is stored and an information output part for printing container information including information showing mass measured by the mass measurement part on a label for output; and a container information inspection device installed in a luggage inspection place and equipped with a mass measurement part for measuring the mass of the fluid container, an information reading part for reading container information from a label attached to the fluid container and a container information determination part for determining whether or not the mass of the fluid container measured by the mass measurement part is matched with the mass shown by the container information read by the information reading part.

Document "Spatially Offset Raman Spectroscopy (SORS) for Liquid Screening", Paul W. Loeffen et.al., Proceedings of SPIE Vol. 8189, discloses a technique using spatially offset Raman spectroscopy (SORS) as a method which enables the precise chemical identification of substances from a reference list and, due to the rich spectral information, has an inherently high probability of detection and low false alarm rate. The method is generally capable of screening substances inside non-metallic containers such as plastic and glass bottles. SORS is typically successful through opaque plastic and coloured glass, which are often challenging for conventional backscatter Raman spectroscopy. SORS is performed in just a few seconds by shining a laser light onto the container and then measuring the Raman signal at the excitation point but also at one or more offset positions. Each measurement has different relative orthogonal contributions from the container and contents Raman spectra, so that, with no prior knowledge, the pure Raman spectra of both the container and contents can be extracted - either by scaled subtraction or via multivariate statistical methods in an automated process. In that document, results are described from a prototype SORS device designed for aviation security and the advantages and limitations of SORS are discussed.

Document WO 2008/075511 A1 discloses a liquid inspection equipment which can judge whether dangerous liquid such as gasoline is filling a container or not even in the case of a thick-wall container and can distinguish liquid explosive substance and acid/alkali liquid accurately. The liquid inspection equipment comprises a weight sensor and a dielectric constant sensor for measuring the weight and the dielectric constant of a container filled with liquid, respectively, a database recording the judgment reference weight and the judgment reference dielectric constant for each type of container, and a liquid judgment section to which the judgment reference weight and the judgment reference dielectric constant, and measured weight and measured dielectric constant are inputted. The liquid judgment section evaluates whether the measured weight and the measured dielectric constant satisfy the judgment reference weight and the judgment reference dielectric constant or not. If they do not satisfy, the liquid is judged as a dangerous substance and an alarm is actuated.

Document WO 2008/062185 A1 discloses methods and an apparatus for screening the unknown contents of containers using Raman spectroscopy, especially for security screening applications such as in airports. A probe light beam is directed through the wall of a container to a sample region within the container contents. Light scattered out of the beam within the sample region is collected along a path which passes through a separate part of the container wall, for Raman spectral analysis.

Document "Raman spectroscopic studies of explosive materials: towards a field-able explosives detector", I.R. Lewis et.al., Spectrochimica Acta Part A 51, discloses a technique using Raman spectroscopy, with red (632.8 nm) and near-infrared (785 and 1064 nm) excitation to obtain spectra of neat explosives. Samples with dimensions from a minimum size of 10 µm have been analyzed utilizing a Raman microprobe fitted with a charge-coupled device (CCD) array detector. Little sample fluorescence is observed for 23 of the 32 high explosives using 632.8 nm excitation and all of the samples can be measured with a 1064 nm Nd:YAG laser. 785 nm radiation affords a compromise between sensitivity and fluorescence suppression. Problems of instrumentation and sample handling have been investigated. Spectra have been obtained for explosives, both neat and in plastic and glass containers. The feasibility of sampling explosives through colored glass, which is highly fluorescent in the visible, is also demonstrated.

### SUMMARY

In view of the problem with the conventional technology, embodiments of the present disclosure provide methods and apparatuses for inspection of liquids. In particular, according to the invention, there are provided an apparatus and a method according to the independent claims 1 and 8. Developments are set forth in the dependent claims.

Preferably, if the package of the liquid is opaque and has been opened, the method further comprises: taking part of the liquid and putting it into a transparent package; directing the laser-emitting end of the Raman spectra module at the transparent package, operating to emit a laser beam to perform Raman spectra analysis on the part of the liquid; comparing Raman spectra information of the part of the liquid with the standard Raman spectra information of the liquid in the database to obtain an analysis result of the liquid.

Preferably, the Raman spectra module comprises: a laser that emits laser to irradiate the liquid and generate Raman spectra; a spectrometer that receives the Raman spectra of the liquid; an optical path module coupled between the laser and the spectrometer and configured to split the optical path, cause the laser arrive at the liquid, and transmit the Raman spectra back to the spectrometer.

Preferably, the optical path module comprises a probe with or without optical fiber.

Preferably, there are one or more lasers, spectrometers or optical path module in the Raman spectra module.

Preferably, the electronic scale comprises one or more weighing sensors.

Preferably, the computer data processor comprises a PC or an embedded processing unit.

Preferably, the computer data processor performs the comparison using a predefined recognition algorithm.

The inspection apparatus according to the present disclosure has advantages, such as capability of material identification, rapid examination speed, small volume, light weight, portability, low cost, free of radiation, and simple maintenance. The method and apparatus according to the present disclosure are suitable for inspection in public places having large number and fast flow of people.

### BRIEF DESCRIPTION OF THE DRAWINGS

For a better understanding of the present disclosure, embodiments of the disclosure will be described with reference to the figures, in which:
- Fig. 1: illustrates a schematic block diagram of an inspection apparatus according to an embodiment of the disclosure;
- Fig. 2: illustrates a block diagram of a data processor in the inspection apparatus of Fig. 1;
- Fig. 3: illustrates a functional block diagram of a computer processor in the inspection apparatus of Fig. 1; and
- Fig. 4: illustrates a flowchart of an inspection method according to an embodiment of the disclosure.

The figures do not illustrate every circuit or structure in the embodiments. Throughout the figures, identical reference signs refer to identical or similar components or features.

### DETAILED DESCRIPTION OF THE EMBODIMENTS

The particular embodiments of the disclosure are described below in details. It shall be noted that the embodiments herein are used for illustration only, but not limiting the disclosure. In the description below, a number of particular details are explained to provide a better understanding to the disclosure. However, it is apparent to those skilled in the art the disclosure can be implemented without these particular details. In other examples, well-known circuits, materials or methods are not described so as not to obscure the disclosure.

Throughout the specification, reference to "one embodiment," "an embodiment," "one example" or "an example" means that the specific features, structures or properties described in conjunction with the embodiment or example are included in at least one embodiment of the present disclosure. Therefore, the phrases "in one embodiment," "in an embodiment," "in one example" or "in an example" occurred at various positions throughout the specification may not refer to one and the same embodiment or example. Furthermore, specific features, structures or properties may be combined into one or several embodiments or examples in any appropriate ways. Moreover, it should be understood by those skilled in the art that figures here are for the purpose of illustration, and not necessarily drawn to scale. It should be appreciated that "connecting" or "coupling" a component to another component may mean that the component is directly connected or coupled to the other component, or there may be a component intervening between them. On the contrary, "directly connecting" or "directly coupling" a component to another component mans that there is no intervening component. Like reference signs refer to similar elements throughout the figures. The term "and/or" used herein means any and all combinations of one or more listed items.

In view of the problem with the conventional technology, embodiments of the present invention provide a method and an apparatus for inspection of liquid, which combines Raman-spectra-based detection with a technique using electronic scale and barcode scanning to rapidly examine a liquid under inspection, and determine whether the liquid is safe or dangerous.

In other examples not forming part of the present invention, each of the Raman spectra analysis technique and the technique using electronic scale and barcode scanning can be used independently for material identification of the liquid, which facilitates rapid examination. For example, the Raman spectra analysis technique may be used independently for inspection of the liquid, and the technique using electronic scale and barcode scanning may also be used independently for inspection of the liquid.

In embodiments of the disclosure, the package of a liquid is first observed. If the package is made of transparent or semi-transparent material, the Raman spectra analysis technique is used to examine the liquid. Specifically, the transparent or semi-transparent part of the package is aligned with a laser-emitting end of a Raman spectra analysis module. Upon operation, a laser is emitted, and Raman spectra analysis is performed on the liquid. The Raman spectra information of the liquid is compared with standard Raman spectra information of the liquid in a database to obtain an analysis result. Further, material identification may be performed on the liquid.

If the package is opaque, the technique using electronic scale and barcode scanning is used to examine the liquid. The liquid is placed in an electronic scale to obtain weight information of the liquid. A barcode reader reads barcode information on the liquid, and retrieves standard weight information of the liquid from a database based on the read barcode information. Then, the weight information from the electronic scale and the standard weight information from the database are automatically compared to obtain an analysis result.

For dangerous liquid wrapped in an opaque package, liquid without barcode information, or liquid for which the package has been opened and the weight cannot be determined, a method of sampling with a package of transparent material may be used. Then, the Raman spectra analysis technique is used for examination or material identification of the liquid to obtain an analysis result.

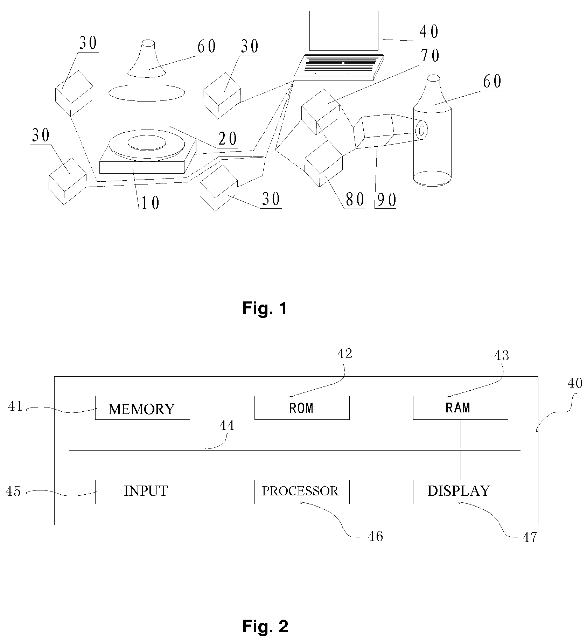

Fig. 1 illustrates a schematic block diagram of an inspection apparatus according to an embodiment of the disclosure. As shown in Fig. 1, the inspection apparatus includes: a laser 70 that emits laser; a spectrometer 80 that receives Raman spectra of a liquid; an optical path module 90 that is provided between the laser 70 and the spectrometer 80, and that splits optical path, causes the laser to arrive at the liquid 60 under inspection, and transmits the Raman spectra of the liquid 60 back to the spectrometer 80; an electronic scale 10 that measures to obtain an actual weight of the liquid 60; a barcode reader 30 that reads a barcode on the liquid 60, and provides it to a computer data processor; and a computer data processor 40 that is coupled with the electronic scale 10 and the barcode reader 30, and that processes data collected by a data collector and outputs an examination result.

In some embodiments, the optical path module 90 may be a probe with or without optical fiber. In some embodiments, there may be one or more Raman spectra modules each consisting of the above laser, the spectrometer, and the optical path module. The Raman spectra module is used for rapid inspection of liquid in cooperation with the computer data processor.

As shown in Fig. 1, the barcode reader 30 is disposed around a carrier tray 20. Cables for outputting data collected by the electronic scale 10 and the barcode reader 30 are coupled to the computer data processor 40 in which the collected data are stored. In some embodiments, the electronic scale has one or more weighing sensors. According to the present invention, multiple barcode readers are provided in a uniform arrangement. The computer data processor 40 may be a PC or an embedded processing unit. Further, the computer data processor 40 may use a predefined recognition algorithm for comparison operation.

Fig. 2 illustrates a block diagram of the computer data processor 40 in the inspection apparatus of Fig. 1. As shown in Fig. 2, the data collected by the data collector are stored in a memory 41. A Read Only Memory (ROM) 42 stores configuration information and programs for the computer data processor. A Random Access Memory (RAM) 43 stores temporarily various data during operation of the processor 46. The memory 41 may further store computer programs for data processing. An internal bus 44 connects the memory 41, ROM 42, RAM 43, an input device 45, the processor 46, and a display device 47 together.

When a user inputs an operation command via the input device 45, such as buttons, sensors, or keyboard and mouse, instruction codes in the computer programs instruct the processor to perform predefined data processing algorithms. The obtained result of data processing may be displayed in the display device 47, such as LCD display, or directly outputted in a form of hardcopy.

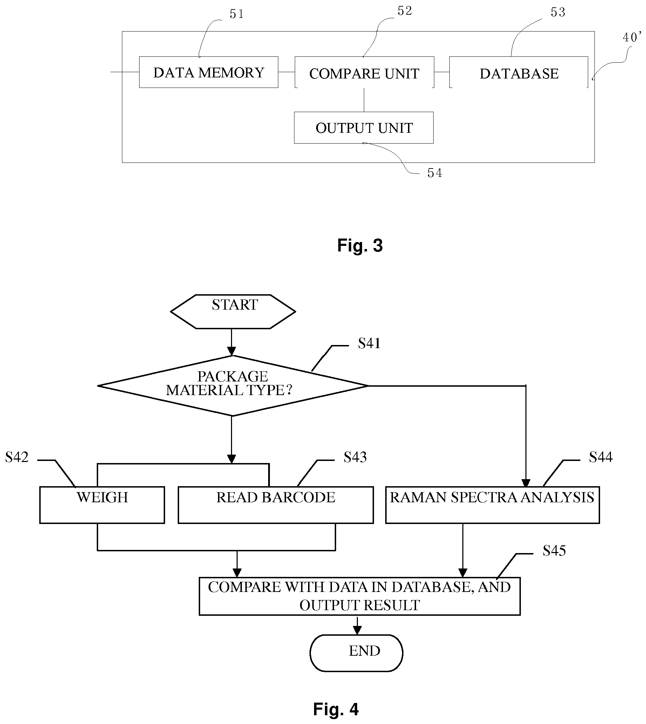

Fig. 2 illustrates a functional block diagram of the computer data processor 40 in the inspection apparatus of Fig. 1. As another example of the computer data processor shown in Fig. 3, the computer data processor 40' includes: a data memory 51 that stores information about programs, database and the like; a comparison unit 52 that compares the actual weight data from the electronic scale and standard weight data pre-stored in the database to determine identification information of the liquid 60; the database 53 that stores predefined standard weight information and barcode information; and an output unit 54 (e.g., a display or some other type of output device) that outputs the identification information from the comparison unit 52 to an operator.

According to the present invention, the liquid is determined to be suspicious if a difference between the actual weight information and the standard weight information is larger than a first preset threshold, for example, 1% of the weight of the liquid.

According to the present invention, the liquid is determined to be suspicious if a difference between the Raman spectra information of the liquid and the standard Raman spectra information (e.g., a difference of peak values or peak positions) is larger than a second preset threshold.

Fig. 4 illustrates a flowchart of an inspection method according to an embodiment of the disclosure. As shown in Fig. 4, at step S41, the package material of the liquid 60 under inspection is observed for selection of different inspection methods according to the package material. At step S42, if the package material is opaque, the liquid 60 is placed on the carrier tray 20, and the electronic scale automatically measures the weight of the liquid 60. At the same time, at step S43, the barcode reader 30 automatically reads the barcode information of the liquid 60, and the weight information and the barcode information are transmitted to the computer data processor 40. At step S44, if the package material is transparent or semi-transparent, the liquid 60 is placed at the optical path module 90 of the Raman spectrometer for examination, and the examination information is transmitted to the computer data processor 40. At step S45, the computer data processor 40 automatically compares the received data with standard data in the database 53, and displays the comparison result on the output unit 54.

Although the above embodiments are described with combination of Raman spectra technique and barcode technique, in other examples not forming part of the present invention the article under inspection may be directly weighted, and standard weight information may be obtained from a computer based on the barcode on the package for comparison, despite whether the package is transparent or semi-transparent.

Further, in the case that the package of the liquid can be opened or has been opened, part of the liquid may be sampled for Raman spectra inspection. In an example, part of the liquid may be taken out and put into a transparent package. Then, the laser-emitting end of the Raman spectra module is directed at the transparent package. Upon operation, a laser beam is emitted to perform Raman spectra analysis on the part of the liquid. The Raman spectra information of the part of the liquid is compared with the standard Raman spectra information of the liquid in the database to obtain an analysis result of the liquid.

While the present disclosure has been described with reference to several typical embodiments, it is apparent to those skilled in the art that the terms are used for illustration and explanation purpose and not for limitation. The present disclosure may be practiced in various forms without departing from the scope of the appended claims. It should be understood that the embodiments are not limited to any of the foregoing details, and shall be interpreted broadly within the scope as defined by the following claims. Therefore, modifications and alternatives falling within the scope of the appended claims are to be encompassed by the scope of the claims as attached.

## Claims

1. An inspection apparatus comprising:
a Raman spectra module (80) configured to examine a package containing a liquid (60) when the package of the liquid is transparent or semi-transparent,
the inspection apparatus comprising
an electronic scale (10) configured to measure the weight of a liquid (60) contained in a package when the package of the liquid is opaque;
a carrier tray (20) on which the package containing the liquid can be placed;
a plurality of barcode readers (30) arranged in a uniform configuration around the carrier tray (20) and configured to read barcode information on the package containing the liquid when the package containing the liquid is opaque;
a computer data processor (40) coupled with the electronic scale, the barcode readers, and the Raman spectra module (80), and configured to, when the package of the liquid is opaque:
- retrieve standard weight information of the liquid from a database (53) based on the read barcode information,
- compare the weight information from the electronic scale with the standard weight information from the database to determine whether the liquid is dangerous or suspicious; and
- determine the liquid to be dangerous or suspicious if a difference between the weight information and the standard weight information is larger than 1% of the weight of the liquid;
wherein the computer data processor (40) is further configured to:
- compare Raman spectra information of the liquid obtained by the Raman spectra module with standard Raman spectra information of the liquid in a database to obtain an analysis result of the liquid,
- determine the liquid to be dangerous or suspicious, if a difference between the Raman spectra information of the liquid and the standard Raman spectra information is larger than a second preset threshold, and
- identify the material of the liquid.

2. The inspection apparatus according to claim 1, wherein the Raman spectra module comprises:
a laser (70) configured to irradiate the liquid and generate Raman spectra;
a spectrometer (80) configured to receive the Raman spectra of the liquid;
an optical path module (90) coupled between the laser (70) and the spectrometer (80) and configured to:
- split the optical path,
- cause the laser to arrive at the liquid, and
- transmit the Raman spectra back to the spectrometer (80).

3. The inspection apparatus according to claim 2, wherein the optical path module (90) comprises a probe with or without an optical fiber.

4. The inspection apparatus according to claim 1, wherein there are one or more lasers (70), spectrometers (80) or optical path modules (90) in the Raman spectra module.

5. The inspection apparatus according to claim 1, wherein the electronic scale (10) comprises one or more weighing sensors.

6. The inspection apparatus according to claim 1, wherein the computer data processor (40) comprises a PC or an embedded processing unit.

7. The inspection apparatus according to claim 1, wherein the computer data processor (40) is configured to perform the comparison using a predefined recognition algorithm.

8. A method for inspection of liquids performed in the inspection apparatus of claim 2, comprising steps of:
determining (S41) whether the package of the liquid (60) is transparent, semi-transparent or opaque;
if the package of the liquid is transparent or semi-transparent, directing a laser-emitting end of the Raman spectra module (80) at the transparent or semi-transparent package of the liquid, operating to emit the laser beam, performing (S44) Raman spectra analysis on the liquid, and comparing (S45) Raman spectra information of the liquid with standard Raman spectra information of the liquid in a database using the computer data processor (40) to obtain an analysis result of the liquid, determining the liquid to be dangerous or suspicious, if a difference between the Raman spectra information of the liquid and the standard Raman spectra information is larger than a second preset threshold, and identifying the material of the liquid;
if the package of the liquid is opaque, placing (S42) the liquid on the electronic scale (10) to obtain weight information of the liquid, reading (S43) barcode information of the liquid with at least one of the the barcode readers (30), retrieving standard weight information for the liquid from a database based on the read barcode information, and comparing (S45) the weight information from the electronic scale (10) with the standard weight information from the database to determine whether the liquid is dangerous or suspicious, wherein the liquid is determined to be dangerous or suspicious if a difference between the weight information and the standard weight information is larger than 1% of the weight of the liquid

9. The method according to claim 8, wherein if the package of the liquid is opaque and has been opened, the method further comprises:
taking part of the liquid and putting it into a transparent package;
directing the laser-emitting end of the Raman spectra module at the transparent package, operating to emit a laser beam to perform Raman spectra analysis on the part of the liquid; and
comparing Raman spectra information of the part of the liquid with the standard Raman spectra information of the liquid in the database to obtain an analysis result of the liquid.

10. The method according to claim 9, wherein if a difference between the Raman spectra information of the liquid and the standard Raman spectra information is larger than the second preset threshold, the liquid is determined to be dangerous or suspicious, and the material of the liquid is identified.

## Patentansprüche

1. Inspektionsvorrichtung, die umfasst:
ein Raman-Spektrenmodul (80), das so konfiguriert ist, dass es eine eine Flüssigkeit (60) enthaltende Verpackung untersucht, wenn die Verpackung der Flüssigkeit transparent oder halbtransparent ist, wobei die Inspektionsvorrichtung umfasst
eine elektronische Waage (10), die so konfiguriert ist, dass sie das Gewicht einer in einer Verpackung enthaltenen Flüssigkeit (60) misst, wenn die Verpackung der Flüssigkeit undurchsichtig ist;
ein Trägertablett (20), auf das die Verpackung mit der Flüssigkeit gestellt werden kann;
eine Vielzahl von Strichcodelesern (30), die in einer gleichmäßigen Konfiguration um das Trägertablett (20) herum angeordnet und so konfiguriert sind, dass sie Strichcodeinformation auf der die Flüssigkeit enthaltenden Verpackung lesen, wenn die die Flüssigkeit enthaltende Verpackung undurchsichtig ist;
einen Computerdatenprozessor (40), der mit der elektronischen Waage, den Strichcodelesern und dem Raman-Spektrenmodul (80) gekoppelt ist und so konfiguriert ist, dass er, wenn die Verpackung der Flüssigkeit undurchsichtig ist,
- Standardgewichtsinformation der Flüssigkeit aus einer Datenbank (53) basierend auf der gelesenen Strichcodeinformation abruft,
- die Gewichtsinformation von der elektronischen Waage mit der Standardgewichtsinformation aus der Datenbank vergleicht, um zu bestimmen, ob die Flüssigkeit gefährlich oder verdächtig ist; und
- die Flüssigkeit als gefährlich oder verdächtig einstuft, wenn eine Differenz zwischen der Gewichtsinformation und der Standardgewichtsinformation größer als 1 % des Gewichts der Flüssigkeit ist;
wobei der Computerdatenprozessor (40) weiterhin konfiguriert ist, um:
- Raman-Spektreninformation der Flüssigkeit, die vom Raman-Spektrenmodul erhalten wurde, mit Standard-Raman-Spektreninformation der Flüssigkeit in einer Datenbank zu vergleichen, um ein Analyseergebnis der Flüssigkeit zu erhalten,
- die Flüssigkeit als gefährlich oder verdächtig zu bestimmen, wenn eine Differenz zwischen der Raman-Spektreninformation der Flüssigkeit und der Standard-Raman-Spektreninformation größer als ein zweiter voreingestellter Schwellenwert ist, und
- die Inhaltsstoffe der Flüssigkeit zu identifizieren.

2. Inspektionsvorrichtung nach Anspruch 1, wobei das Raman-Spektrenmodul umfasst:
einen Laser (70), der die Flüssigkeit bestrahlt und Raman-Spektren erzeugt;
ein Spektrometer (80), das so konfiguriert ist, dass es die Raman-Spektren der Flüssigkeit empfängt;
ein Strahlengangmodul (90), das zwischen den Laser (70) und das Spektrometer (80) gekoppelt ist und konfiguriert ist, um:
- den optischen Pfad aufzuteilen,
- zu bewirken, dass der Laser auf die Flüssigkeit trifft, und
- die Raman-Spektren zurück zum Spektrometer (80) zu senden.

3. Inspektionsvorrichtung nach Anspruch 2, wobei das Strahlengangmodul (90) eine Sonde mit oder ohne Lichtleiter umfasst.

4. Inspektionsvorrichtung nach Anspruch 1, wobei im Raman-Spektrenmodul ein oder mehrere Laser (70), Spektrometer (80) oder Strahlengangmodule (90) vorhanden sind.

5. Inspektionsvorrichtung nach Anspruch 1, wobei die elektronische Waage (10) einen oder mehrere Wägesensoren umfasst.

6. Inspektionsvorrichtung nach Anspruch 1, wobei der Computerdatenprozessor (40) einen PC oder eine eingebettete Verarbeitungseinheit umfasst.

7. Inspektionsvorrichtung nach Anspruch 1, wobei der Computerdatenprozessor (40) so konfiguriert ist, dass er den Vergleich unter Verwendung eines vordefinierten Erkennungsalgorithmus durchführt.

8. Verfahren zur Inspektion von Flüssigkeiten, das in der Inspektionsvorrichtung nach Anspruch 2 durchgeführt wird und die folgenden Schritte umfasst:
Bestimmen (S41), ob die Verpackung der Flüssigkeit (60) transparent, halbtransparent oder undurchsichtig ist; wenn die Verpackung der Flüssigkeit transparent oder halbtransparent ist, Richten eines Laser-emittierenden Endes des Raman-Spektrenmoduls (80) auf die transparente oder halbtransparente Verpackung der Flüssigkeit, Betreiben, um den Laserstrahl zu emittieren, Durchführen einer (S44) Raman-Spektralanalyse an der Flüssigkeit, und Vergleichen (S45) von Raman-Spektreninformation der Flüssigkeit mit Standard-Raman-Spektreninformation der Flüssigkeit in einer Datenbank unter Verwendung des Computerdatenprozessors (40), um ein Analyseergebnis der Flüssigkeit zu erhalten, Bestimmen der Flüssigkeit als gefährlich oder verdächtig, wenn ein Unterschied zwischen der Raman-Spektreninformation der Flüssigkeit und der Standard-Raman-Spektreninformation größer als ein zweiter voreingestellter Schwellenwert ist, und Identifizieren der Inhaltsstoffe der Flüssigkeit;
wenn die Verpackung der Flüssigkeit undurchsichtig ist, Platzieren (S42) der Flüssigkeit auf der elektronischen Waage (10), um eine Gewichtsinformation der Flüssigkeit zu erhalten, Lesen (S43) von Strichcodeinformation der Flüssigkeit mit mindestens einem der Strichcodeleser (30), Abrufen von Standardgewichtsinformation für die Flüssigkeit aus einer
Datenbank auf der Grundlage der gelesenen Strichcodeinformation, und Vergleichen (S45) der Gewichtsinformation von der elektronischen Waage (10) mit der Standardgewichtsinformation von der Datenbank, um zu bestimmen, ob die Flüssigkeit gefährlich oder verdächtig ist, wobei die Flüssigkeit als gefährlich oder verdächtig bestimmt wird, wenn ein Unterschied zwischen der Gewichtsinformation und der Standardgewichtsinformation größer als 1% des Gewichts der Flüssigkeit ist.

9. Verfahren nach Anspruch 8, wobei, wenn die Verpackung der Flüssigkeit undurchsichtig ist und geöffnet wurde, das Verfahren ferner umfasst:
Entnehmen eines Teils der Flüssigkeit und Abfüllen in eine durchsichtige Verpackung;
Richten des Laser-emittierenden Endes des Raman-Spektrenmoduls auf die transparente Verpackung, um einen Laserstrahl zu emittieren, um eine Raman-Spektrenanalyse an dem Teil der Flüssigkeit durchzuführen; und
Vergleichen der Raman-Spektreninformation des Teils der Flüssigkeit mit der Standard-Raman-Spektreninformation der Flüssigkeit in der Datenbank, um ein Analyseergebnis der Flüssigkeit zu erhalten.

10. Verfahren nach Anspruch 9, wobei, wenn eine Differenz zwischen der Raman-Spektreninformation der Flüssigkeit und der Standard-Raman-Spektreninformation größer als der zweite voreingestellte Schwellenwert ist, die Flüssigkeit als gefährlich oder verdächtig bestimmt wird und die Inhaltsstoffe der Flüssigkeit identifiziert werden.

## Revendications

1. Appareil d'inspection comprenant :
un module de spectroscopie Raman (80) conçu pour examiner un emballage contenant un liquide (60) lorsque l'emballage du liquide est transparent ou semi-transparent, l'appareil d'inspection comprenant une balance électronique (10) conçue pour mesure le poids du liquide (60) contenu dans un emballage lorsque l'emballage du liquide est opaque ;
un porte-plateau (20) sur lequel est placé l'emballage contenant le liquide ; une pluralité de lecteurs de codes-barres (30) disposés dans une configuration uniforme autour du porte-plateau (20) et conçus pour lire les informations de codes-barres sur l'emballage contenant le liquide lorsque l'emballage contenant le liquide est opaque ;
un processeur de données informatiques (40) couplé à la balance électronique aux lecteurs de codes-barres et au module de spectroscopie Raman (80), et conçu pour, lorsque l'emballage de liquide est opaque :
- récupérer les informations relatives au poids standard du liquide à partir d'une base de données (53) en fonction des informations de codes-barres lues,
- comparer les informations relatives au poids en provenance de la balance électronique avec les informations relatives au poids standard provenant de la base de données pour déterminer si le liquide est dangereux ou suspect ; et
- déterminer le liquide comme étant dangereux ou suspect si une différence entre les informations relatives au poids et les informations relatives au poids standard est supérieure à 1 % du poids du liquide ;
le processeur de données informatiques (40) étant en outre conçu pour :
- comparer les informations relatives au spectre Raman du liquide obtenues par le module de spectroscopie Raman avec les informations de spectroscopie Raman standard du liquide dans une base de données pour obtenir un résultat d'analyse du liquide,
- déterminer le liquide comme étant dangereux ou suspect, si une différence entre les informations relatives au spectre Raman du liquide et les informations relatives au spectre Raman standard est supérieure à un second seuil prédéfini, et
- identifier le matériau du liquide.

2. Appareil d'inspection selon la revendication 1, le module de spectroscopie Raman comprenant :
un laser (70) conçu pour exposer le liquide au rayonnement et générer un spectre Raman ;
un spectromètre (80) conçu pour recevoir le spectre de Raman du liquide ;
et un module de trajet optique (90) couplé entre le laser (70) et le spectromètre (80) et conçu pour :
- diviser le trajet optique,
- amener le laser à parvenir au liquide, et
- transmettre en retour le spectre de Raman au spectromètre (80).

3. Appareil d'inspection selon la revendication 2, le module de trajet optique (90) comprenant une sonde avec ou sans fibre optique.

4. Appareil d'inspection selon la revendication 1, il existe un ou plusieurs lasers (70), spectromètres (80) ou modules de trajet optique (90) dans le module de spectroscopie Raman.

5. Appareil d'inspection selon la revendication 1, la bascule électronique (10) comprenant un ou plusieurs capteurs de poids.

6. Appareil d'inspection selon la revendication 1, le processeur de données informatiques (40) comprenant un PC ou une unité de traitement intégrée.

7. Appareil d'inspection selon la revendication 1, le processeur de données informatiques (40) étant conçu pour procéder à la comparaison à l'aide d'un algorithme de reconnaissance prédéfini.

8. Procédé d'inspection de liquides exécuté dans l'appareil d'inspection selon la revendication 2, comprenant les étapes consistant à :
déterminer (S41) si l'emballage du liquide (60) est transparent, semi-transparent ou opaque ;
si l'emballage du liquide est transparent ou semi-transparent, diriger une extrémité d'émission laser du module de spectroscopie Raman (80) vers l'emballage transparent ou semi-transparent du liquide, émettre le faisceau laser, procéder à l'analyse (S44) de spectroscopie Raman sur le liquide, et comparer (S45) les informations de spectroscopie Raman du liquide avec les informations de spectroscopie Raman du liquide dans une base de données à l'aide du processeur de données informatiques (40) pour obtenir un résultat d'analyse du liquide, déterminer le liquide comme étant dangereux ou suspect si une différence entre les informations de spectroscopie de Raman du liquide et les informations de spectroscopie de Raman standard est supérieure à un second seuil prédéfini, et identifier le matériau du liquide ;
si l'emballage du liquide est opaque, placer (S42) le liquide sur la bascule électronique (10) pour obtenir des informations relatives au poids du liquide, lire (S43) les informations de codes-barres du liquide en faisant appel à au moins l'un des lecteurs de codes-barres 30), récupérer les informations de poids standard pour le liquide à partir d'une base de données en fonction des informations de codes-barres lues, et comparer (S45) les informations relatives au poids provenant de la bascule électronique (10) avec les informations relatives au poids standard provenant de la base de données pour déterminer le liquide comme étant dangereux ou suspect, le liquide étant déterminé comme étant dangereux ou suspect si une différence entre les informations de poids et les informations de poids standard est supérieure à 1 % du poids du liquide.

9. Procédé selon la revendication 8, si l'emballage du liquide est opaque et a été ouvert, le procédé consistant en outre à :
prélever une partie du liquide et le placer dans un emballage transparent ;
diriger l'extrémité d'émission laser du module de spectroscopie de Raman vers l'emballage transparent, émettre un faisceau laser pour procéder à l'analyse de spectroscopie Raman sur la partie du liquide ; et
comparer les informations de spectroscopie Raman de la partie de liquide avec les informations relatives au spectre de Raman du liquide dans la base de données pour obtenir un résultat d'analyse du liquide.

10. Procédé selon la revendication 9, si une différence entre les informations de spectroscopie de Raman du liquide et les informations de spectroscopie de Raman standard est supérieure au second seuil prédéfini, le liquide étant déterminé comme étant dangereux ou suspect, et la composition du liquide est identifiée.
